(19) Europäisches Patentamt / European Patent Office / Office européen des brevets

(11) **EP 3 957 773 A1**

(12) **EUROPEAN PATENT APPLICATION**
published in accordance with Art. 153(4) EPC

(43) Date of publication:
**23.02.2022 Bulletin 2022/08**

(21) Application number: **20890138.9**

(22) Date of filing: **25.05.2020**

(51) International Patent Classification (IPC):
**C25B 15/02** (2021.01)    **H02J 3/38** (2006.01)

(52) Cooperative Patent Classification (CPC):
**C25B 1/02; C25B 9/65; C25B 15/02; H02J 3/38;**
Y02E 60/36

(86) International application number:
**PCT/CN2020/092057**

(87) International publication number:
**WO 2021/098172 (27.05.2021 Gazette 2021/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.11.2019  CN 201911133803**

(71) Applicant: **Sungrow Power Supply Co., Ltd.
Hefei, Anhui 230088 (CN)**

(72) Inventors:
• **GU, Yu**
  **Hefei, Anhui 230088 (CN)**
• **ZHAO, Wei**
  **Hefei, Anhui 230088 (CN)**
• **LI, Jiangsong**
  **Hefei, Anhui 230088 (CN)**
• **XU, Jun**
  **Hefei, Anhui 230088 (CN)**
• **WANG, Tengfei**
  **Hefei, Anhui 230088 (CN)**

(74) Representative: **Rooney, John-Paul
Withers & Rogers LLP
2 London Bridge
London SE1 9RA (GB)**

(54) **NEW ENERGY COMPOSITE HYDROGEN PRODUCTION SYSTEM AND CONTROL METHOD THEREFOR**

(57)    A new energy composite hydrogen production system and a control method therefor. The new energy composite hydrogen production system comprises: a new energy power generation system (10), a power conversion system (20), an alkali liquid hydrogen production system (30), and a non-alkali liquid hydrogen production system (40). An output end of the power conversion system (20) is connected to an input electrode of the alkali liquid hydrogen production system (30) and an input electrode of the non-alkali liquid hydrogen production system (40), respectively, so that the power conversion system (20) can, according to the quantity of energy outputted by the new energy power generation system (10), choose to provide hydrogen production energy to the alkali liquid hydrogen production system (30) or the non-alkali liquid hydrogen production system (40). Furthermore, the non-alkali liquid hydrogen production system (40) can replace battery energy storage so as to implement energy reception in a weak energy region, thereby avoiding the waste of energy and improving the economic benefits of hydrogen production.

Figure 1

## Description

This application claims the priority to Chinese Patent Application No. 201911133803.3 titled "NEW ENERGY COMPOSITE HYDROGEN PRODUCTION SYSTEM AND CONTROL METHOD THEREFOR", filed on November 19, 2019 with the China National Intellectual Property Administration, which is incorporated herein by reference in its entirety.

## FIELD

The present disclosure relates to the technical field of hydrogen production, and in particular to a new energy hybrid hydrogen production system and a method for controlling the new energy hybrid hydrogen production system.

## BACKGROUND

Currently, water electrolysis technologies commonly include alkaline electrolysis, proton exchange membrane (PEM) electrolysis and solid oxide electrolysis. An alkaline electrolyzer has advantages of low cost, large hydrogen production and mature technologies, and thus the alkaline electrolysis is most commonly used. However, in scenarios with a load less than 30%, the alkaline electrolyzer produces hydrogen with decreased purity, and is unsuitable for weak power periods of photovoltaic power generation, such as in the morning and evening of a day, and cloudy and rainy days, and the weak power period of wind power generation under a weak wind condition. Therefore, application of the alkaline electrolysis easily causes energy waste, resulting in economically inefficient hydrogen production.

In the conventional technology, energy storage batteries are arranged in a hydrogen production system to store energy in the weak power periods. However, a battery is expensive, resulting in significantly increased cost. Moreover, batteries at the end of their service life cause environmental pollution, and recycling of the battery is uneconomical, further reducing the economic efficiency of hydrogen production.

## SUMMARY

In view of this, a new energy hybrid hydrogen production system and a method for controlling the new energy hybrid hydrogen production system are provided according to the present disclosure, to solve the problem of a low economic benefit of hydrogen production caused by using a battery energy storage system to absorb energy in a week power periods according to the conventional technology.

In a first aspect of the present disclosure, a new energy hybrid hydrogen production system is provided, which includes a new energy power generation system, a power conversion system, an alkaline hydrogen production system and a non-alkaline hydrogen production system.

An output end of the new energy power generation system is connected with an input end of the power conversion system.

Output ends of the power conversion system are respectively connected with an input electrode of the alkaline hydrogen production system and an input electrode of the non-alkaline hydrogen production system.

In an embodiment, the power conversion system includes a power converter and two switching units.

An input end of the power converter serves as the input end of the power conversion system.

An output end of the power converter is connected with first ends of the two switching units.

Second ends of the two switching units serve as two output ends of the power conversion system that are respectively connected with the input electrode of the alkaline hydrogen production system and the input electrode of the non-alkaline hydrogen production system.

Control ends of the two switching units, a communication end of the alkaline hydrogen production system and a communication end of the non-alkaline hydrogen production system are connected with a communication end of the power converter.

In an embodiment, the power conversion system includes two power converters.

Input ends of the two power converters are connected in parallel with each other at a connection point that serves as the input end of the power conversion system.

Output ends of the two power converters serve as two output ends of the power conversion system that are respectively connected with the input electrode of the alkaline hydrogen production system and the input electrode of the non-alkaline hydrogen production system.

A communication end of each of the two power converters is connected with a communication end of one of the alkaline hydrogen production system and the non-alkaline hydrogen production system that corresponds to the power converter.

The two power converters perform control in a master-slave manner.

In an embodiment, the power conversion system includes a system controller and two power converters.

Input ends of the two power converters are connected in parallel with each other at a connection point that serves as the input end of the power conversion system.

Output ends of the two power converters serve as two output ends of the power conversion system that are respectively connected with the input electrode of the alkaline hydrogen production system and the input electrode of the non-alkaline hydrogen production system.

A communication end of each of the two power converters is connected with a communication end of one of the alkaline hydrogen production system and the non-alkaline hydrogen production system that corresponds to the power converter.

The two power converters are controlled in a centralized manner by the system controller.

In an embodiment, in a case that the new energy power generation system is a photovoltaic power generation system, the power converter is a DC/DC converter, and

in a case that the new energy power generation system is a wind power generation system, the power converter is an AC/DC converter.

In an embodiment, a capacity of the alkaline hydrogen production system is configured to be greater than a capacity of the non-alkaline hydrogen production system.

In an embodiment, the non-alkaline hydrogen production system is at least one of a PEM hydrogen production system and a solid oxide hydrogen production system.

In a second aspect of the present disclosure, a method for controlling a new energy hybrid hydrogen production system is provided. The method for controlling a new energy hybrid hydrogen production system is applied to a controller of the new energy hybrid hydrogen production system according to the first aspect, and includes:

determining whether power outputted from the new energy power generation system in the new energy hybrid hydrogen production system meets a hydrogen production requirement of the alkaline hydrogen production system in the new energy hybrid hydrogen production system;

controlling, if the power outputted from the new energy power generation system does not meet the hydrogen production requirement of the alkaline hydrogen production system, the power conversion system in the new energy hybrid hydrogen production system to provide power for hydrogen production to the non-alkaline hydrogen production system in the new energy hybrid hydrogen production system; and

controlling, if the power outputted from the new energy power generation system meets the hydrogen production requirement of the alkaline hydrogen production system, the power conversion system to provide power for hydrogen production to at least the alkaline hydrogen production system.

In an embodiment, the determining whether power outputted from the new energy power generation system in the new energy hybrid hydrogen production system meets a hydrogen production requirement of the alkaline hydrogen production system in the new energy hybrid hydrogen production system includes:

performing a maximum power point tracking (MPPT) operation based on information on the power outputted from the new energy power generation system that is acquired in a real time manner, to determine a theoretical hydrogen production input value of the alkaline hydrogen production system;

determining whether the theoretical hydrogen production input value is greater than a minimum hydrogen production limit of the alkaline hydrogen production system;

determining, if the theoretical hydrogen production input value is greater than the minimum hydrogen production limit of the alkaline hydrogen production system, that the power outputted from the new energy power generation system meets the hydrogen production requirement of the alkaline hydrogen production system; and

determining, if the theoretical hydrogen production input value is less than or equal to the minimum hydrogen production limit of the alkaline hydrogen production system, that the power outputted from the new energy power generation system does not meet the hydrogen production requirement of the alkaline hydrogen production system.

In an embodiment, in a case that the power conversion system includes two power converters including a first power converter configured to provide power for hydrogen production to the alkaline hydrogen production system and a second power converter configured to provide power for hydrogen production to the non-alkaline hydrogen production system, the controlling the power conversion system to provide power for hydrogen production to at least the alkaline hydrogen production system includes:

controlling the first power converter to operate, and controlling the second power converter to be in a standby state; and

in a case that the theoretical hydrogen production input value is greater than a regulation command value or a hydrogen production limit of the alkaline hydrogen production system, controlling the first power converter to operate with the regulation command value or the hydrogen production limit as an output reference value, and controlling the second power converter to operate with a result of the theoretical hydrogen production input value minus the output reference value of the first power converter as an output reference value.

In an embodiment, the in a case that the theoretical hydrogen production input value is greater than a regulation command value or a hydrogen production limit of the alkaline hydrogen production system, controlling the first power converter to operate with the regulation command value or the hydrogen production limit as an output reference value, and controlling the second power converter to operate with a result of the theoretical hydrogen production input value minus the output reference value of the first power converter as an output reference value includes:

determining whether the first power converter receives the regulation command value;

determining, if the first power converter receives the regulation command value, whether the theoretical hydrogen production input value is greater than the regulation command value; if the theoretical hydrogen production input value is greater than the regulation command value, controlling the first power converter to operate with the regulation command value as the output reference value, and controlling the second power converter to operate with a result of the theoretical hydrogen production input value minus the regulation command value as the output reference value; and if the theoretical hydrogen production input value is less than or equal to the regulation command value, controlling the first power converter to operate with the theoretical hydrogen production input value as the output reference value, and controlling the second power converter to be in the standby state;

determining, if the first power converter receives no regulation command value, whether the theoretical hydrogen production input value is greater than the hydrogen production limit; if the theoretical hydrogen production input value is greater than the hydrogen production limit, controlling the first power converter to operate with the hydrogen production limit as the output reference value, and controlling the second power converter to operate with a result of the theoretical hydrogen production input value minus the hydrogen production limit as the output reference value; and if the theoretical hydrogen production input value is less than or equal to the hydrogen production limit, controlling the first power converter to operate with the theoretical hydrogen production input value as the output reference value, and controlling the second power converter to be in the standby state.

In an embodiment, before the determining whether power outputted from the new energy power generation system in the new energy hybrid hydrogen production system meets a hydrogen production requirement of the alkaline hydrogen production system in the new energy hybrid hydrogen production system, the method further includes: controlling, when the new energy power generation system is powered on, the power conversion system to output power to the non-alkaline hydrogen production system.

In an embodiment, in a case that the theoretical hydrogen production input value is a theoretical hydrogen production input power, the minimum hydrogen production limit is a minimum hydrogen production power limit; and

in a case that the theoretical hydrogen production input value is a theoretical hydrogen production input current, the minimum hydrogen production limit is a minimum hydrogen production current limit, and the theoretical hydrogen production input current is determined by following equations: $U_{in}=U\_limit+(P_{mpp}*R_{eq})1/2$, and, $I_{in}= P_{mpp}/U_{in}$;

where $U_{in}$ represents a theoretical hydrogen production input voltage, $U\_limit$ represents a minimum hydrogen production voltage limit of the alkaline hydrogen production system, $P_{mpp}$ represents the theoretical hydrogen production input power, $R_{eq}$ represents an equivalent resistance of the alkaline hydrogen production system, and $I_{in}$ represents the theoretical hydrogen production input current.

In an embodiment, the theoretical hydrogen production input value is a theoretical hydrogen production input current or a theoretical hydrogen production input power, the regulation command value is a regulation command current or a regulation command power, and the hydrogen production limit is a hydrogen production current limit or a hydrogen production power limit.

In an embodiment, in a case that the power conversion system includes a power converter and two switching units, the controller of the new energy hybrid hydrogen production system is a controller arranged in the power converter;

and

in a case that the power conversion system includes two power converters, the controller of the new energy hybrid hydrogen production system is a communication master among the two power converters, or a system controller in the new energy hybrid hydrogen production system.

It can be seen from the above technical solutions that a new energy hybrid hydrogen production system is provided according to the present disclosure. The new energy hybrid hydrogen production system includes a new energy power generation system, a power conversion system, an alkaline hydrogen production system and a non-alkaline hydrogen production system. Output ends of the power conversion system are respectively connected with an input electrode of the alkaline hydrogen production system and an input electrode of the non-alkaline hydrogen production system, so that the power conversion system can determine to provide power for hydrogen production to the alkaline hydrogen production system or the non-alkaline hydrogen production system according to the power outputted from the new energy power generation system. Therefore, the non-alkaline hydrogen production system replaces the battery energy storage system to receive power in the weak power periods, thereby avoiding waste of power and improving the economic efficiency of hydrogen production.

**BRIEF DESCRIPTION OF THE DRAWINGS**

Figure 1 is a schematic diagram of a new energy hybrid hydrogen production system according to an embodiment of the present disclosure;

Figure 2 is a schematic diagram of a new energy hybrid hydrogen production system according to another embodiment of the present disclosure;

Figures 3 is a schematic diagram of a new energy hybrid hydrogen production system according to another embodiment of the present disclosure;

Figures 4 is a schematic diagram of a new energy hybrid hydrogen production system according to another embodiment of the present disclosure;

Figure 5 is a flow chart of a method for controlling a new energy hybrid hydrogen production system according to an embodiment of the present disclosure;

Figure 6 is a flow chart of a method for controlling a new energy hybrid hydrogen production system according to another embodiment of the present disclosure;

Figure 7 is a flow chart of a method for controlling a new energy hybrid hydrogen production system according to another embodiment of the present disclosure; and

Figure 8 is a flow chart of a method for controlling a new energy hybrid hydrogen production system according to another embodiment of the present disclosure.

**DETAILED DESCRIPTION**

In order to make objects, technical solutions and advantages of embodiments of the present disclosure clearer, the technical solutions in the embodiments of the present disclosure are clearly and completely described with reference to the drawings in the embodiments of the present disclosure. It is apparent that the described embodiments are only some embodiments of the present disclosure, rather than all embodiments. All other embodiments obtained by those skilled in the art based on the embodiments of the present disclosure without any creative work fall within the scope of the present disclosure.

In the present disclosure, terms of "include", "comprise" or any other variants are intended to be non-exclusive. Therefore, a process, method, article or device including a series of elements includes not only the elements but also other elements that are not enumerated, or also include the elements inherent for the process, method, article or device. Unless expressively limited otherwise, the statement "comprising (including) one..." does not exclude the case that other similar elements may exist in the process, method, article or device.

A new energy hybrid hydrogen production system is provided according to an embodiment of the present disclosure, to solve the problem of economically inefficient hydrogen production caused by using energy storage batteries to receive power in weak power periods.

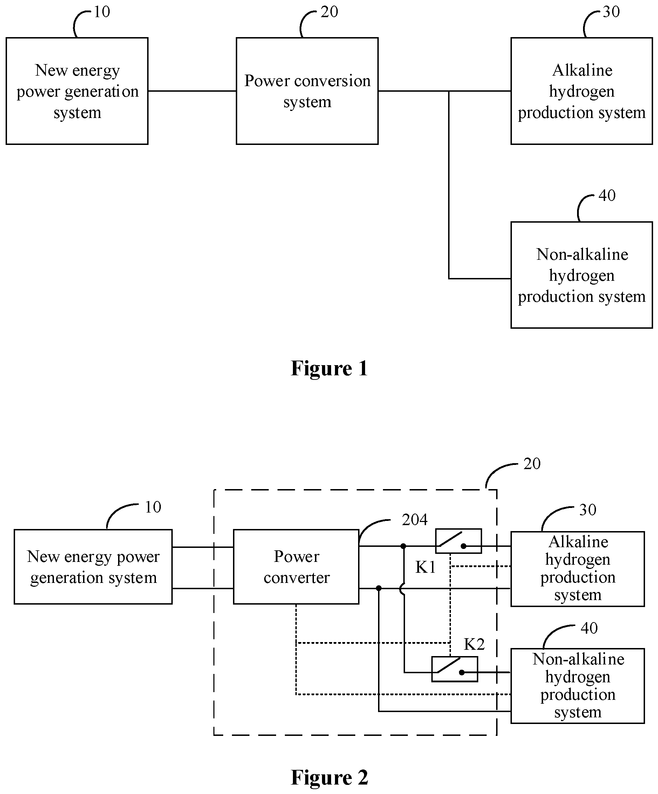

As shown in Figure 1, the new energy hybrid hydrogen production system includes a new energy power generation system 10, a power conversion system 20, an alkaline hydrogen production system 30 and a non-alkaline hydrogen production system 40.

An output end of the new energy power generation system 10 is connected with an input end of the power conversion system 20. The power conversion system 20 has two output ends. One of the two output ends is connected with an input electrode of the alkaline hydrogen production system 30, and the other of the two output ends is connected with an input electrode of the non-alkaline hydrogen production system 40.

The new energy power generation system 10 may be a photovoltaic power generation system or a wind power generation system, which is not limited herein and depends on the actual situation. All these alternatives fall within the scope of the present disclosure. In practices, the non-alkaline hydrogen production system 40 is at least one of a PEM hydrogen production system and a solid oxide hydrogen production system. In addition, the non-alkaline hydrogen production system 40 may further be other hydrogen production systems matching the weak power period, which are not enumerated herein, and may be selected depends on the actual situation. All these alternatives fall within the scope of the present disclosure.

In the embodiment, the alkaline hydrogen production system 30 and the non-alkaline hydrogen production system 40 are connected with the new energy power generation system 10 through the power conversion system 20, so that the power conversion system 20 may determine to provide power for hydrogen production to the alkaline hydrogen production system 30 or the non-alkaline hydrogen production system 40 according to power outputted from the new energy power generation system 10. Therefore, the non-alkaline hydrogen production system 40 replaces the battery energy storage system to receive power in the weak power periods, thereby avoiding waste of power and improving the economic efficiency of hydrogen production, and further avoiding the problem of environmental pollution caused by using the energy storage batteries to receive power in the weak power periods.

In addition, in order to fully use advantages of mature technology, low cost and large hydrogen production of the alkaline hydrogen production system 30, a capacity of the alkaline hydrogen production system 30 may be configured to be greater than a capacity of the non-alkaline hydrogen production system 40, to improve the economic efficiency of hydrogen production. For example, the capacity of the alkaline hydrogen production system 30 may be configured to be 80% of a total capacity, and the capacity of the non-alkaline hydrogen production system 40 may be configured to be 20% of the total capacity. Other capacity ratios may be adopted, which depend on the actual situation. All these alternatives fall within the scope of the present disclosure.

It should further be noted that the power conversion system 20 may provide power for hydrogen production to the non-alkaline hydrogen production system 40 when the power outputted from the new energy power generation system 10 does not meet a hydrogen production requirement of the alkaline hydrogen production system 30. The power conversion system 20 may provide power for hydrogen production to at least the alkaline hydrogen production system 30 when the power outputted from the new energy power generation system 10 meets the hydrogen production requirement of the alkaline hydrogen production system 30.

For example, in a case that the new energy power generation system 10 is a photovoltaic power generation system, the new energy power generation system 10 outputs low power in the weak power periods with insufficient light in the morning and evening in a day, or cloudy or rainy days. In a case that the new energy power generation system 10 is a wind power generation system, the power outputted from the new energy power generation system 10 is low in the week power periods under a weak wind condition.

Therefore, in the case that the new energy power generation system 10 is the photovoltaic power generation system, the power outputted from the new energy power generation system 10 does not meet the hydrogen production requirement of the alkaline hydrogen production system 30 in the week power periods in the morning and evening of a day, or cloudy or rainy days, the power conversion system 20 provides power for hydrogen production to the non-alkaline hydrogen production system 40. In the case that the new energy power generation system 10 is the wind power generation system, the power outputted from the new energy power generation system 10 does not meet the hydrogen production requirement of the alkaline hydrogen production system 30 in the week power periods under the weak wind condition, the power conversion system 20 provides power for hydrogen production to the non-alkaline hydrogen production system 40.

It should be noted that the power conversion system 20 shown in Figure 1 may have variations including the following structures according to the embodiments of the present disclosure.

In a first structure as shown in Figure 2, the power conversion system 20 includes a power converter 204 and two switching units (such as, K1 and K2 as shown in Figure 2).

An input end of the power converter 204 serves as the input end of the power conversion system 20. An output end of the power converter 204 is connected with first ends of the two switching units. Second ends of the two switching units serve as the two output ends of the power conversion system 20 respectively to be connected with an input electrode of the alkaline hydrogen production system 30 and an input electrode of the non-alkaline hydrogen production system 40.

For convenience of description, the two switching units may be referred to as a first switching unit and a second switching unit. A first end of the first switching unit and a first end of the second switching unit are connected with the output end of the power converter 204. A second end of the first switching unit is connected with the input electrode of the alkaline hydrogen production system 30. A second end of the second switching unit is connected with the input electrode of the non-alkaline hydrogen production system 40.

Each of the two switching unit may include one switching device arranged on any one of two poles, or may include two switching devices respectively arranged on the two poles, which is not limited herein and depends on the actual situation. All these variations fall within the scope of the present disclosure.

In a case that each of the two switching unit includes one switching device (such as K1 and K2 as shown in Figure 2) arranged on any one of the two poles, the first ends of the two switching devices are connected with one of the two poles of the output end of the power converter 204, a second end of each of the two switching devices is connected with an electrode of one of the alkaline hydrogen production system 30 and the non-alkaline hydrogen production system 40 corresponding to the switching device, and another electrode of each of the alkaline hydrogen production system 30 and the non-alkaline hydrogen production system 40 is connected with the other one of the two poles of the output end of the power converter 204.

In a case that each of the two switching unit includes two switching devices respectively arranged on two poles, for each of the two switching units, a first end of one of the switching devices is connected with a positive pole of the output end of the power converter 204, and a second end of the one of the switching devices is connected with a positive input electrode of one of the alkaline hydrogen production system 30 and the non-alkaline hydrogen production system 40 corresponding to the switching unit; and a first end of the other one of the switching devices is connected with a negative pole of the output end of the power converter 204, a second end of the other one of the switching devices is connected with a negative input electrode of the one of the alkaline hydrogen production system 30 and the non-alkaline hydrogen production system 40 corresponding to the switching unit.

In practices, the switching device described above may be any one of a relay, a contactor and a circuit breaker, which is not limited herein and depends on the actual situation. All these alternatives fall within the scope of the present disclosure. Moreover, the switching unit may further be other switching devices, which are not described in detail herein and fall within the scope of the present disclosure.

Control ends of the two switching units, a communication end of the alkaline hydrogen production system 30 and a communication end of the non-alkaline hydrogen production system 40 are connected with a communication end of the power converter 204. The power converter 204 exchanges information with the alkaline hydrogen production system 30, the non-alkaline hydrogen production system 40 and the two switching units through the communication end of the power converter 204. For example, the power converter 204 transmits a switching control command to one of the switching units and receives a regulation command from one of the alkaline hydrogen production system 30 and the non-alkaline hydrogen production system 40 corresponds to the switching unit.

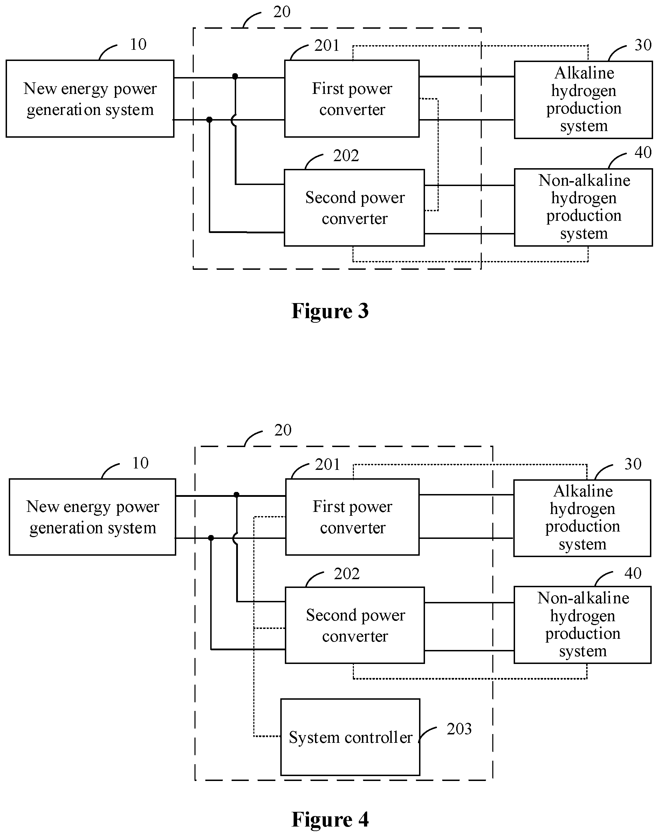

In a second structure as shown in Figure 3, the power conversion system 20 includes two power converters (such as power converters 201 and 202 as shown in Figure 3).

Input ends of the two power converters are connected in parallel with each other at a connection point that serves as the input end of the power conversion system 20. Output ends of the two power converters serve as the two output ends of the power conversion system 20 that are connected with the input electrodes of the alkaline hydrogen production system 30 and the non-alkaline hydrogen production system 40 corresponding to the two power converters, respectively.

For convenience of description, the two power converters are referred to as a first power converter 201 and a second power converter 202. An input end of the first power converter 201 and an input end of the second power converter 202 are connected with the output end of the new energy power generation system 10. An output end of the first power converter 201 is connected with the input electrode of the alkaline hydrogen production system 30. An output end of the second power converter 202 is connected with the input electrode of the non-alkaline hydrogen production system 40.

A communication end of each of the two power converters is connected with a communication end of one of the one of the alkaline hydrogen production system 30 and the non-alkaline hydrogen production system 40 that corresponds to the power converter. For example, a communication end of the first power converter 201 is connected with a communication end of the alkaline hydrogen production system 30, and a communication end of the second power converter 202 is connected with a communication end of the non-alkaline hydrogen production system 40, so that each of the two power converters can communicate with a hydrogen production system corresponding to the power converter. The two power converters perform control in a master-slave manner. For example, the first power converter 201 serves as a communication master and the second power converter 202 serves as a communication slave. Alternatively, the second power converter 202 serves as the communication master and the first power converter 201 serves as the communication slave, which is not limited herein. All these alternatives fall within the scope of the present disclosure. The communication master is connected with a control end of the communication slave, which is not limited herein. All connection relationships that ensure the two power converters performing control in the master-slave manner fall within the scope of the present disclosure.

In a third structure as shown in Figure 4, the power conversion system 20 includes a system controller 203 and two power converters (such as power converters 201 and 202 as shown in Figure 4).

Input ends of the two power converters are connected in parallel with each other at a connection point that serves as the input end of the power conversion system 20. Output ends of the two power converters serve as the two output ends of the power conversion system 20 that are connected with the input electrodes of the alkaline hydrogen production system 30 and the non-alkaline hydrogen production system 40 corresponding to the two power converters, respectively.

An input end of the first power converter 201 and an input end of the second power converter 202 are connected with the output end of the new energy power generation system 10. An output end of the first power converter 201 is connected with the input electrode of the alkaline hydrogen production system 30. An output end of the second power converter 202 is connected with the input electrode of the non-alkaline hydrogen production system 40.

A communication end of each of the two power converters is connected with a communication end of one of the alkaline hydrogen production system 30 and the non-alkaline hydrogen production system 40 that corresponds to the power converter. For example, a communication end of the first power converter 201 is connected with a communication end of the alkaline hydrogen production system 30, and a communication end of the second power converter 202 is connected with a communication end of the non-alkaline hydrogen production system 40, so that each of the two power converters communicates with a hydrogen production system corresponding to the power converter, for example, the power converter receives a regulation command from the hydrogen production system. Control ends of the two power converters are connected with the system controller 203. The two power converters are controlled in a centralized manner by the system controller 203.

For the above three structures, in practices, in a case that the new energy power generation system 10 is the photovoltaic power generation system, the power converter describe above is a DC/DC converter; and in a case that the new energy power generation system 10 is the wind power generation system, the power converter describe above is an AC/DC converter. A topology of the power converter may be an isolated topology or a non-isolated topology, which is not limited herein and depends on the actual situation. All these alternatives fall within the scope of the present disclosure. The topology of the power converter may further be a boost topology or a buck topology, which is not limited herein and depends on the actual situation. All these alternatives fall within the scope of the present disclosure.

The structure of the power conversion system 20 is not limited to the above three structures. All structures that implement the functions described above fall within the scope of the present disclosure.

In the embodiment, operation switching between the alkaline hydrogen production system and the non-alkaline hydrogen production system can be implemented by controlling the switching unit and controlling by the two power converters in the master-slave manner or the centralized manner. The control method is simple, facilitating promotion and application.

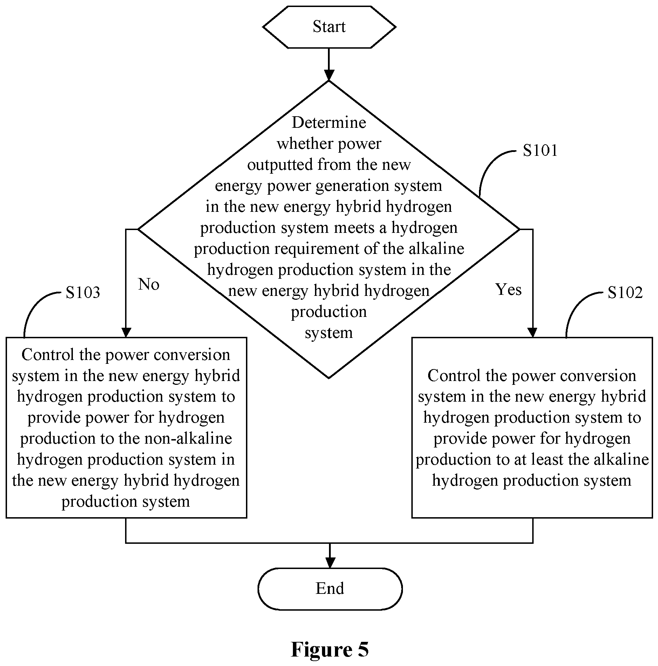

A method for controlling a new energy hybrid hydrogen production system is provided according to an embodiment of the present disclosure. The method is applied to the controller of the new energy hybrid hydrogen production system according to any one of the embodiments as described above. As shown in Figure 5, the method for controlling a new energy hybrid hydrogen production system includes the following steps S101 to S103.

In step S101, it is determined whether the power outputted from the new energy power generation system in the new energy hybrid hydrogen production system meets the hydrogen production requirement of the alkaline hydrogen production system in the new energy hybrid hydrogen production system.

It should be noted that in a case that the power outputted from the new energy power generation system meets the hydrogen production requirement of the alkaline hydrogen production system, advantages of the alkaline production system can be fully used. In a case that the power outputted from the new energy power generation system does not meet the hydrogen production requirement of the alkaline hydrogen production system, the advantages of the alkaline production system cannot be fully used, which may further cause energy waste. In this case, the alkaline hydrogen production system should stop producing hydrogen. Therefore, before controlling the alkaline hydrogen production system to produce hydrogen, it is required to determine whether the power outputted from the new energy power generation system meets the hydrogen production requirement of the alkaline hydrogen production system, to improve the economic efficiency of hydrogen production.

In practices, before step S101, the method further includes: controlling, when the new energy power generation system is powered on, the power conversion system to output power to the non-alkaline hydrogen production system, so that the non-alkaline hydrogen production system produces hydrogen.

It should be noted that, generally, when the new energy power generation system is powered on, the power outputted from the new energy power generation system is low and cannot meet the hydrogen production requirement of the alkaline hydrogen production system. Therefore, the non-alkaline hydrogen production system may first be controlled to produce hydrogen, and then step S101 is performed.

8

In a case that the power outputted from the new energy power generation system meets the hydrogen production requirement of the alkaline hydrogen production system, step S102 is performed.

In step S102, the power conversion system in the new energy hybrid hydrogen production system is controlled to provide power for hydrogen production to at least the alkaline hydrogen production system.

It should be noted that the new energy hybrid hydrogen production system produces hydrogen in the following two modes: a hydrogen production mode in which the non-alkaline hydrogen production system produces hydrogen and a hydrogen production mode in which the alkaline hydrogen production system produces hydrogen. Based on the above two hydrogen production modes, the new energy hybrid hydrogen production system may further produce hydrogen in a third mode: a hydrogen co-production mode in which the alkaline hydrogen production system and the non-alkaline hydrogen production system both produce hydrogen. The hydrogen production mode of the new energy hybrid hydrogen production system is not limited herein and depends on the actual situation. All these alternatives fall within the scope of the present disclosure.

In the case that the power outputted from the new energy power generation system meets the hydrogen production requirement of the alkaline hydrogen production system, purity of the hydrogen produced by the alkaline hydrogen production system does not decrease, and the advantages of the alkaline hydrogen production system can be fully used. Therefore, in the case that the power outputted from the new energy power generation system meets the hydrogen production requirement of the alkaline hydrogen production system, hydrogen is produced by the alkaline hydrogen production system. Of course, in this case, hydrogen may be produced by only the alkaline hydrogen production system, or by both the alkaline hydrogen production system and the non-alkaline hydrogen production system, which is not limited herein. All these alternatives fall within the scope of the present disclosure.

In a case that the power outputted from the new energy power generation system does not meet the hydrogen production requirement of the alkaline hydrogen production system, step S103 is performed.

In step S103, the power conversion system in the new energy hybrid hydrogen production system is controlled to provide power for hydrogen production to the non-alkaline hydrogen production system in the new energy hybrid hydrogen production system.

In the case that the power outputted from the new energy power generation system does not meet the hydrogen production requirement of the alkaline hydrogen production system, the alkaline hydrogen production system produces hydrogen with decreased purity. Therefore, in this case, hydrogen is produced by the non-alkaline hydrogen production system to cope with the case of low power outputted from the new energy power generation system by fully utilizing dynamic matching performance of the non-alkaline hydrogen production system, thereby improving the economic efficiency of hydrogen production.

In the embodiment, in the case that the power outputted from the new energy power generation system does not meet the hydrogen production requirement of the alkaline hydrogen production system, the power conversion system provides power for hydrogen production to the non-alkaline hydrogen production system; and in the case that the power outputted from the new energy power generation system meets the hydrogen production requirement of the alkaline hydrogen production system, the power conversion system provides power for hydrogen production to at least the alkaline hydrogen production system, so that the non-alkaline hydrogen production system replaces the energy storage battery to receive power in the week power periods, thereby avoiding waste of power and improving the economic efficiency of hydrogen production, and further avoiding the problem of environmental pollution caused by batteries.

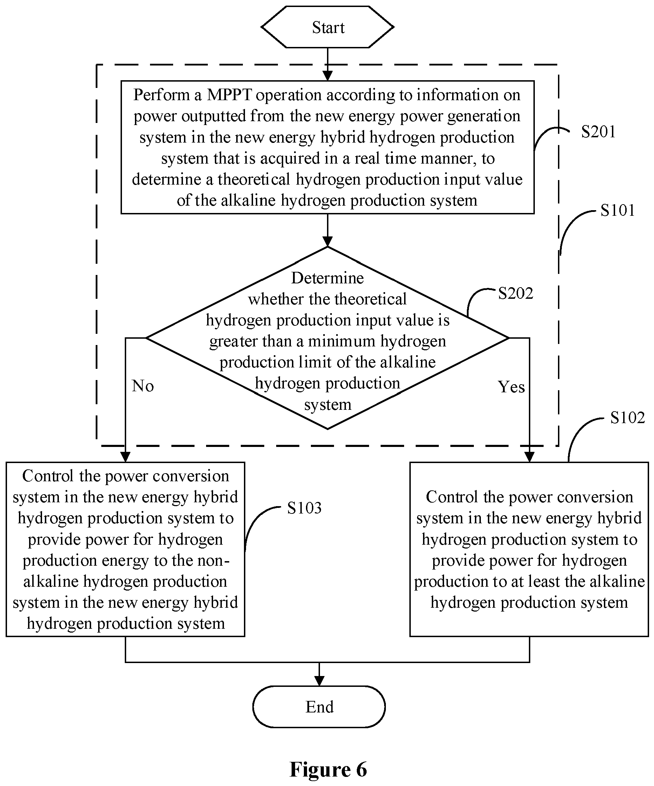

In practices, as show in Figure 6, step S101 in Figure 5 according to the embodiment of the present disclosure includes the following steps S201 to S202.

In step S201, an MPPT operation is performed based on information on the power outputted from the new energy power generation system in the new energy hybrid hydrogen production system that is acquired in a real time manner, to determine a theoretical hydrogen production input value of the alkaline hydrogen production system.

The MPPT operation is an algorithm to track a maximum power point of the new energy power generation system. The MPPT algorithm may be implemented by any one of a constant voltage method, a disturbance observation method and an incremental conductance method, which is not limited herein and depends on the actual situation. All these alternatives fall within the scope of the present disclosure. In addition, the MPPT algorithm may further be another algorithm for tracking a maximum power point, which is not described in detail herein. All these alternatives fall within the scope of the present disclosure.

The theoretical hydrogen production input value described above may be a theoretical hydrogen production input power or a theoretical hydrogen production input current, which is not limited herein and depends on the actual situation. All these alternatives fall within the scope of the present disclosure.

The theoretical hydrogen production input value of the alkaline hydrogen production system is determined to convert the information on the power outputted from the new energy power generation system into an input parameter of the alkaline hydrogen production system, and determine whether the power outputted from the new energy power generation system meets the hydrogen production requirement of the alkaline hydrogen production system in combination with subsequent steps.

In step S202, it is determined whether the theoretical hydrogen production input value is greater than a minimum hydrogen production limit of the alkaline hydrogen production system.

If the theoretical hydrogen production input value is greater than the minimum hydrogen production limit of the alkaline hydrogen production system, it is determined that the power outputted from the new energy power generation system meets the hydrogen production requirement of the alkaline hydrogen production system. If the theoretical hydrogen production input value is less than or equal to the minimum hydrogen production limit of the alkaline hydrogen production system, it is determined that the power outputted from the new energy power generation system does not meet the hydrogen production requirement of the alkaline hydrogen production system.

In practices, the minimum hydrogen production limit corresponds to the theoretical hydrogen production input value. For example, in a case that the theoretical hydrogen production input value is the theoretical hydrogen production input power, the minimum hydrogen production limit is a minimum hydrogen production power limit. In this case, step S202 includes: determining whether the theoretical hydrogen production input power is greater than the minimum hydrogen production power limit of the alkaline hydrogen production system. If the theoretical hydrogen production input power is greater than the minimum hydrogen production power limit of the alkaline hydrogen production system, it is determined that the theoretical hydrogen production input value is greater than the minimum hydrogen production limit of the alkaline hydrogen production system. If the theoretical hydrogen production input power is less than or equal to the minimum hydrogen production power limit of the alkaline hydrogen production system, it is determined that the theoretical hydrogen production input value is less than or equal to the minimum hydrogen production limit of the alkaline hydrogen production system.

Alternatively, in a case that the theoretical hydrogen production input value is the theoretical hydrogen production input current, the minimum hydrogen production limit is a minimum hydrogen production current limit. In this case, step S202 includes: determining whether the theoretical hydrogen production input current is greater than the minimum hydrogen production current limit of the alkaline hydrogen production system. If the theoretical hydrogen production input current is greater than the minimum hydrogen production current limit of the alkaline hydrogen production system, it is determined that the theoretical hydrogen production input value is greater than the minimum hydrogen production limit of the alkaline hydrogen production system. If the theoretical hydrogen production input current is less than or equal to the minimum hydrogen production current limit of the alkaline hydrogen production system, it is determined that the theoretical hydrogen production input value is less than or equal to the minimum hydrogen production limit of the alkaline hydrogen production system. The minimum hydrogen production current limit may be 30% of a rated current or 50% of the rated current, which is not limited herein. All these alternatives fall within the scope of the present disclosure. In addition, the minimum hydrogen production current limit may further be other values, which is not described in detail herein and falls within the scope of the present disclosure.

The above theoretical hydrogen production input current is determined by the following equations:

$$Uin = U\_limit + (Pmpp*Req)^{1/2}, \text{ and } Iin = Pmpp/Uin,$$

where Uin represents a theoretical hydrogen production input voltage, U_limit represents a minimum hydrogen production voltage limit of the alkaline hydrogen production system, Pmpp represents the theoretical hydrogen production input power, Req represents an equivalent resistance of the alkaline hydrogen production system, and Iin represents the theoretical hydrogen production input current.

It can be seen from the new energy hybrid hydrogen production system according to the above embodiments that the power conversion system in the new energy hybrid hydrogen production system may have various structures. The structures are described by taking the above three cases as examples. The first case is that the power conversion system includes two power converters. The second case is that the power conversion system includes a power converter and two switching units. The third case is that the power conversion system includes a system controller and two power converters.

In a case that the power conversion system includes a power converter and two switching units, the controller of the new energy hybrid hydrogen production system is a controller arranged in the power converter, that is, in the second case, the method for controlling a new energy hybrid hydrogen production system is performed by the controller in the power converter. In a case that the power conversion system includes two power converters, the controller of the new energy hybrid hydrogen production system is a communication master among the two power converters, or a system controller in the new energy hybrid hydrogen production system. That is, in the first case, the method for controlling a new energy hybrid hydrogen production system is performed by the communication master among the two power converters. In the third case, the method for controlling a new energy hybrid hydrogen production system is performed by the system controller.

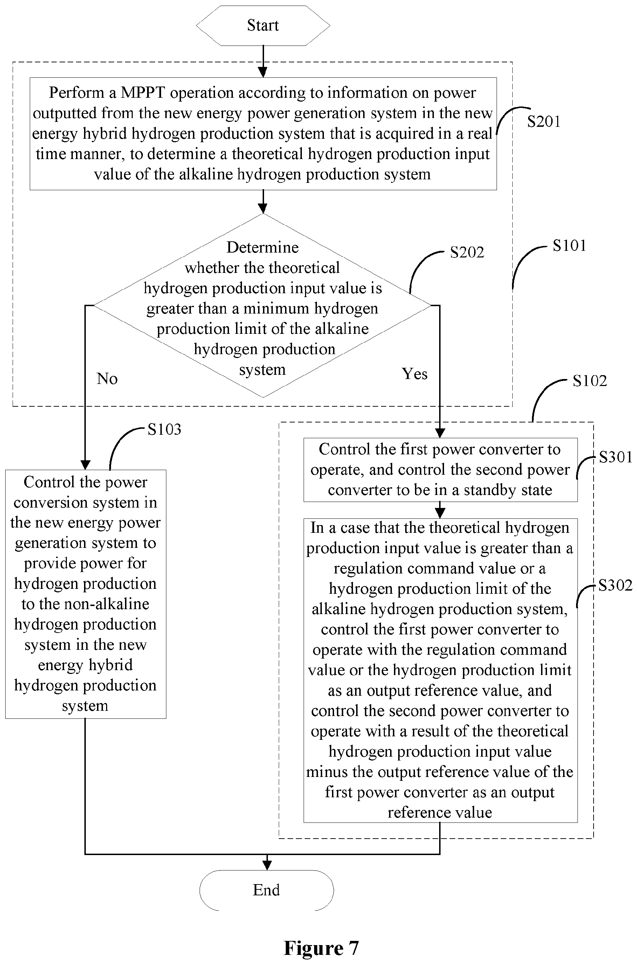

In the case that the power conversion system includes two power converters including a first power converter for providing power for hydrogen production to the alkaline hydrogen production system and a second power converter for providing power for hydrogen production to the non-alkaline hydrogen production system, step S102 in Figure 5 or 6 according to the above embodiments includes the following steps S301 and S302 as shown in Figure 7 (shown by taking Figure 6 as an example herein).

In step S301, the first power converter is controlled to operate, and the second power converter is controlled to be in a standby state.

The first power converter is controlled to operate with the theoretical hydrogen production input value as an output reference value, and provides power for hydrogen production to the alkaline hydrogen production system, such that the alkaline hydrogen production system produces hydrogen. The theoretical hydrogen production input value is the theoretical hydrogen production input current or the theoretical hydrogen production input power. In addition, the second power converter is controlled to be in the standby state, that is, the second power converter does not provide power for hydrogen production to the non-alkaline hydrogen production system, and the non-alkaline hydrogen production system does not produce hydrogen.

In step S302, in a case that the theoretical hydrogen production input value is greater than a regulation command value or a hydrogen production limit of the alkaline hydrogen production system, the first power converter is controlled to operate with the regulation command value or the hydrogen production limit as the output reference value, and the second power converter is controlled to operate with a result of the theoretical hydrogen production input value minus the output reference value of the first power converter from as an output reference value.

The theoretical hydrogen production input value is a theoretical hydrogen production input current or a theoretical hydrogen production input power, the regulation command value is a regulation command current or a regulation command power, and the hydrogen production limit is a hydrogen production current limit or a hydrogen production power limit, which are not described in detail herein. All these alternatives fall within the scope of the present disclosure.

In a case that theoretical hydrogen production input value is greater than the regulation command value, the first power converter operates with the regulation command value as the output reference value, and the second power converter operates with a result of the theoretical hydrogen production input value minus the regulation command value as the output reference value. Alternatively, in a case that theoretical hydrogen production input value is greater than the hydrogen production limit, the first power converter operates with the hydrogen production limit as the output reference value, and the second power converter operates with a result of the theoretical hydrogen production input value minus the hydrogen production limit as the output reference value.

In practices, in a case that the result of the theoretical hydrogen production input value minus the output reference value of the first power converter is greater than a maximum hydrogen production limit of the non-alkaline hydrogen production system, the second power converter operates with the maximum hydrogen production limit of the non-alkaline hydrogen production system as the output reference value, to avoid overload of the non-alkaline hydrogen production system.

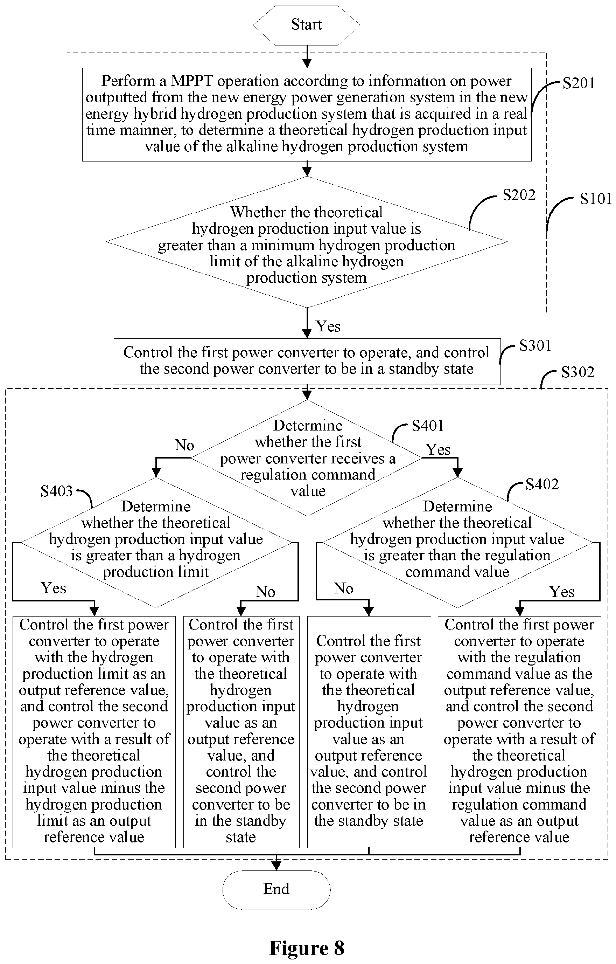

In practices, as shown in Figure 8 (where step S103 is not shown), step S302 includes the following steps S401 to S403.

In step S401, it is determined whether the first power converter receives the regulation command value.

The regulation command value is transmitted by the alkaline hydrogen production system to the first power converter according to a hydrogen production condition of the alkaline hydrogen production system, to cause the first power converter to regulate an output current/power of the first power converter.

If the first power converter receives the regulation command value, step S402 is performed.

In step S402, it is determined whether the theoretical hydrogen production input value is greater than the regulation command value.

If the theoretical hydrogen production input value is greater than the regulation command value, the first power converter is controlled to operate with the regulation command value as the output reference value, the second power converter is controlled to operate with the result of the theoretical hydrogen production input value minus the regulation command value as the output reference value. If the theoretical hydrogen production input value is less than or equal to the regulation command value, the first power converter is controlled to operate with the theoretical hydrogen production input value as the output reference value, the second power converter is controlled to be in the standby state.

It should be noted that in the case that the theoretical hydrogen production input value is greater than the regulation command value, if the result of the theoretical hydrogen production input value minus the regulation command value is greater than the maximum hydrogen production limit of the non-alkaline hydrogen production system, the second power converter operates with the maximum hydrogen production limit of the non-alkaline hydrogen production system as the output reference value.

If the first power converter receives no regulation command value, step S403 is performed.

In step S403, it is determined whether the theoretical hydrogen production input value is greater than the hydrogen production limit.

If the theoretical hydrogen production input value is greater than the hydrogen production limit, the first power converter is controlled to operate with the hydrogen production limit as the output reference value, the second power converter is controlled to operate with the result of the theoretical hydrogen production input value minus the hydrogen production limit as the output reference value. If the theoretical hydrogen production input value is less than or equal to the hydrogen production limit, the first power converter is controlled to operate with the theoretical hydrogen production input value as the output reference value, the second power converter is controlled to be in the standby state.

It should be noted that in the case that the theoretical hydrogen production input value is greater than the hydrogen production limit of the alkaline hydrogen production system, if the result of the theoretical hydrogen production input value minus the hydrogen production limit of the alkaline hydrogen production system is greater than the maximum hydrogen production limit of the non-alkaline hydrogen production system, the second power converter operates with the maximum hydrogen production limit of the non-alkaline hydrogen production system as the output reference value.

The hydrogen production limit may be determined according to capacities of different alkaline hydrogen production systems, and all these alternatives fall within the scope of the present disclosure.

In the embodiment, step S401 is performed first and then step S403 is performed. It should be noted that the steps S401 and S403 described above may alternatively be performed simultaneously, which is not described in detail herein. All these alternatives fall within the scope of the present disclosure.

In the embodiment, cost of a new energy hydrogen production station can be reduced, and the power in the week power periods of the new energy generation can be fully used to maximize the economic efficiency. In addition, the control is simple and the solution is easy to be implemented, thereby facilitating promotion and application.

Here, the new energy hybrid hydrogen production system is described in combination with an exemplary application scenario, in which the new energy power generation system is a photovoltaic power generation system and the non-alkaline hydrogen production system is a PEM hydrogen production system.

In the weak light periods in the morning and evening of a day or cloudy and rainy days, only the PEM hydrogen production system is started to ensure the full utilization of energy. Combined with fluctuation of the new energy power generation system and the requirements of the minimum hydrogen production limit of the alkaline hydrogen production system, the new energy hybrid hydrogen production system may produce hydrogen in two modes or three modes.

In a case that the new energy hybrid hydrogen production system produces hydrogen in two modes, a first hydrogen production strategy is performed. The two modes are as follows. In a first mode, in a case that the power outputted from the new energy power generation system does not meet the hydrogen production requirement of the alkaline hydrogen production system, the PEM hydrogen production system produces hydrogen. In a second mode, in a case that the power outputted from the new energy power generation system meets the hydrogen production requirement of the alkaline hydrogen production system, the PEM hydrogen production system is controlled to stop producing hydrogen, and the alkaline hydrogen production system is controlled to produce hydrogen.

The first hydrogen production strategy includes the following steps (1) to (5).

In step (1), the new energy power generation system outputs power, a switching unit (such as K2 as shown in Figure 2) corresponding to the PEM hydrogen production system (such as 40 as shown in Figure 2) is turned on, a switching unit (such as K1 as shown in Figure 2) corresponding to the alkaline hydrogen production system is turned off, and the power converter 204 operates. In this case, the PEM hydrogen production system produces hydrogen, and the alkaline hydrogen production system stops operating (where this step is described by taking the structure as shown in Figure 2 as an example).

Alternatively, in step (1), the second power converter provides power for hydrogen production to the PEM hydrogen production system, and the PEM hydrogen production system starts to produce hydrogen. The first power converter is in the standby state, and the alkaline hydrogen production system stops operating (where this step is described by taking the structure as shown in Figure 3 or 4 as an example).

In step (2), the system controller determines a power at a maximum power point based on the MPPT operation, that is, the theoretical hydrogen production input power Pmpp, and calculate, based on the MPPT operation, the theoretical hydrogen production input voltage by using the equation: $Uin=U\_limit+(Pmpp*Req)^{1/2}$ and the theoretical hydrogen production input current by using the equation: $Iin=Pmpp/Uin$, where U_limit represents the minimum hydrogen production voltage limit of the alkaline hydrogen production system, and Req represents the equivalent resistance of the alkaline hydrogen production system.

In step (3), Iin is compared with a minimum hydrogen production current limit I_limit of the alkaline hydrogen production system.

I_Limit1 may be 30% of a rated current or 50% of the rated current, depending on the actual alkaline hydrogen production system, which is not limited herein and all these alternatives fall within the scope of the present disclosure.

In step (4), in a case that Iin is greater than I_Limit, the switching unit corresponding to the PEM hydrogen production system is turned off, and the switching unit corresponding to the alkaline hydrogen production system is turned on, so that the PEM hydrogen production system stops producing hydrogen and the alkaline hydrogen production system starts to produce hydrogen (where this step is described by taking the structure as shown in Figure 2 as an example).

Alternatively, in step (4), the second power converter is in a standby state, and the first power converter operates, so that the PEM hydrogen production system stops producing hydrogen and the alkaline hydrogen production system starts to produce hydrogen (where this step is described by taking the structure as shown in Figure 3 or 4, as an example).

In step (5), in a case that Iin is less than or equal to I_Limit, the switching unit corresponding to the PEM hydrogen production system is maintained to be turned on and the switching unit corresponding to the alkaline hydrogen production system is maintained to be turned off, so that the PEM hydrogen production system is maintained in the operation state (where this step is described by taking the structure as shown in Figure 2 as an example).

Alternatively, in step 5, the second power converter is maintained in the operation state and the first power converter is maintained in the standby state, so that the PEM hydrogen production system is maintained in the operation state (where this step is described by taking the structure as shown in Figure 3 or 4 as an example).

In addition, in a case that the new energy hybrid hydrogen production system produces hydrogen in three modes, a second hydrogen production strategy is performed. The three modes are as follows. In a first mode, in a case that the power outputted from the new energy power generation system does not meet the hydrogen production requirement of the alkaline hydrogen production system, the PEM hydrogen production system produces hydrogen. In a second mode, in a case that the power outputted from the new energy power generation system meets the hydrogen production requirement of the alkaline hydrogen production system, but does not reach of the hydrogen production limit of the alkaline hydrogen production system, the PEM hydrogen production system is controlled to stop producing hydrogen, and the alkaline hydrogen production system is controlled to produce hydrogen. In a third mode, in a case that the power outputted from the new energy power generation system reaches the hydrogen production limit of the alkaline hydrogen production system, and the alkaline hydrogen production system cannot completely consume the power outputted from the new energy power generation system, the alkaline hydrogen production system and the PEM hydrogen production system both produce hydrogen, and remaining power excluding power consumed by the alkaline hydrogen production system is consumed by the PEM hydrogen production system.

The second hydrogen production strategy includes the following steps (1) to (8).

In step (1), in a case that the power outputted from the new energy power generation system meets the hydrogen production requirement of the alkaline hydrogen production system, the alkaline hydrogen production system starts to operate.

It should be noted that before the power outputted from the new energy power generation system meets the hydrogen production requirement of the alkaline hydrogen production system, the process and principle are the same as the first hydrogen production strategy, which are not described redundantly herein.

In step (2), it is determined whether the first power converter receives the regulation command value of the alkaline hydrogen production system.

If the first power converter receives the regulation command value of the alkaline hydrogen production system, step (3) is performed. If the first power converter receive no regulation command value of the alkaline hydrogen production system, step (6) is performed.

In step (3), the theoretical hydrogen production input value is compared with the regulation command value.

For example, a regulation command current Iref is compared with the theoretical hydrogen production input current Iin, or a regulation command power Pref is compared with the theoretical hydrogen production input power Pmpp.

In step (4), in a case that the theoretical hydrogen production input value is greater than the regulation command value, the first power converter operates with the regulation command value as the output reference value, and the second power converter operates with the result of the theoretical hydrogen production input value minus the regulation command value as an output reference value.

Specifically, in a case that Iin is greater than Iref, or Pmpp is greater than Pref, the first power converter operates with Iref or Pref as the output reference value, and the second power converter operates with a result of Iin minus Iref, or a result of Pmpp minus Pref as the output reference value, the alkaline hydrogen production system and the PEM hydrogen production system both produce hydrogen.

In step (5), in a case that the theoretical hydrogen production input value is less than or equal to the regulation command value, for example, in a case that Iin is less than or equal to Iref, or Pmpp is less than or equal to Pref, the first power converter is maintained in a current state, and the second power converter is maintained in the standby state, the PEM hydrogen production system does not operate.

In step (6), the theoretical hydrogen production input value is compared with the hydrogen production limit.

In step (7), in a case that the theoretical hydrogen production input value is greater than the hydrogen production limit, the first power converter operates with the hydrogen production limit as the output reference value, and the second power converter operates with the result of the theoretical hydrogen production input value minus the hydrogen production limit as the output reference value.

Specifically, in a case that Iin is greater than I_limit2 or Pmpp is greater than P_limit, the first power converter operates with I_limit2 or P limit as the output reference value, and the second power converter operates with a result of Iin minus I_limit2, or a result of Pmpp minus P limit as the output reference value, the alkaline hydrogen production system and the PEM hydrogen production system both produce hydrogen.

I limit2 represents a maximum hydrogen production current limit of the alkaline hydrogen production system, and Plimit represents a maximum hydrogen production power limit of the alkaline hydrogen production system. I limit2 and P limit are determined according to capacities of different alkaline hydrogen production systems, which are not described in detail herein and fall within the scope of the present disclosure.

In step (8), in a case that the theoretical hydrogen production input value is less than or equal to the hydrogen production limit, for example, in a case that Iin is less than or equal to I_limit2, or Pmpp is less than or equal to P limit, the first power converter is maintained in a current state, and the second power converter is maintained in the standby state, the PEM hydrogen production system does not operate.

In a case that the new energy power generation system is the wind power generation system and the non-alkaline hydrogen production system is other hydrogen production systems, the process and the operation principle of the method for controlling the new energy hybrid hydrogen production system are similar to the embodiments described above, which are not described in detail herein. All these alternatives fall within the scope of the present disclosure.

The embodiments in this specification are described in a progressive way, the same or similar parts among the embodiments can be referred to each other, and each of which emphasizes the differences from others. In particular, since the system or the embodiments of the system is basically similar to the embodiments of the method, the description thereof is relatively simple, and for relevant matters references may be made to the description of the embodiments of the method. The system and the embodiments of the system described above are only schematic. The units described as separate components may or may not be physically separated. The components shown as units may or may not be physical units, that is, the components may be located in one location, or may be distributed to multiple units. Some or all of the modules may be selected based on actual needs to achieve the object of the technical solutions of the embodiment. Those skilled in the art may understand and implement the embodiments of the present disclosure without any creative work.

Those skilled in the art may further understand that units and algorithm steps described in combination with the disclosed embodiments may be implemented by electronic hardware, computer software or a combination thereof. In order to clearly describe interchangeability of the hardware and the software, the units and steps are generally described above based on functions. Whether the functions are realized by the hardware or the software is determined by specific applications of the technical solutions and design constraints. For each of the specific applications, those skilled in the art may adopt a specific implementation to realize the functions described above, and the implementation should fall within the scope of the present disclosure.

Based on the above description of the disclosed embodiments, those skilled in the art can implement or carry out the present disclosure. It is apparent for those skilled in the art to make many modifications to these embodiments. The general principle defined herein may be applied to other embodiments without departing from the spirit or scope of the present disclosure. Therefore, the present disclosure is not limited to the embodiments illustrated herein, but should be defined by the widest scope consistent with the principle and novel features disclosed herein.

**Claims**

1. A new energy hybrid hydrogen production system, comprising a new energy power generation system, a power conversion system, an alkaline hydrogen production system and a non-alkaline hydrogen production system, wherein

   an output end of the new energy power generation system is connected with an input end of the power conversion system, and

   output ends of the power conversion system are respectively connected with an input electrode of the alkaline hydrogen production system and an input electrode of the non-alkaline hydrogen production system.

2. The new energy hybrid hydrogen production system according to claim 1, wherein the power conversion system comprises a power converter and two switching units, wherein

   an input end of the power converter serves as the input end of the power conversion system,

   an output end of the power converter is connected with first ends of the two switching units,

   second ends of the two switching units serve as two output ends of the power conversion system that are respectively connected with the input electrode of the alkaline hydrogen production system and the input electrode of the non-alkaline hydrogen production system, and

   control ends of the two switching units, a communication end of the alkaline hydrogen production system and a communication end of the non-alkaline hydrogen production system are connected with a communication end of the power converter.

3. The new energy hybrid hydrogen production system according to claim 1, wherein the power conversion system comprises two power converters, wherein

input ends of the two power converters are connected in parallel with each other at a connection point that serves as the input end of the power conversion system,
output ends of the two power converters serve as two output ends of the power conversion system that are respectively connected with the input electrode of the alkaline hydrogen production system and the input electrode of the non-alkaline hydrogen production system,
a communication end of each of the two power converters is connected with a communication end of one of the alkaline hydrogen production system and the non-alkaline hydrogen production system that corresponds to the power converter, and
the two power converters perform control in a master-slave manner.

4. The new energy hybrid hydrogen production system according to claim 1, wherein the power conversion system comprises a system controller and two power converters, wherein

input ends of the two power converters are connected in parallel with each other at a connection point that serves as the input end of the power conversion system,
output ends of the two power converters serve as two output ends of the power conversion system that are respectively connected with the input electrode of the alkaline hydrogen production system and the input electrode of the non-alkaline hydrogen production system,
a communication end of each of the two power converters is connected with a communication end of one of the alkaline hydrogen production system and the non-alkaline hydrogen production system that corresponds to the power converter, and
the two power converters are controlled in a centralized manner by the system controller.

5. The new energy hybrid hydrogen production system according to any one of claims 2 to 4, wherein

in a case that the new energy power generation system is a photovoltaic power generation system, the power converter is a DC/DC converter, and
in a case that the new energy power generation system is a wind power generation system, the power converter is an AC/DC converter.

6. The new energy hybrid hydrogen production system according to any one of claims 1 to 4, wherein a capacity of the alkaline hydrogen production system is configured to be greater than a capacity of the non-alkaline hydrogen production system.

7. The new energy hybrid hydrogen production system according to any one of claims 1 to 4, wherein the non-alkaline hydrogen production system is at least one of a PEM hydrogen production system and a solid oxide hydrogen production system.

8. A method for controlling a new energy hybrid hydrogen production system, applied to a controller of the new energy hybrid hydrogen production system according to any one of claims 1 to 7, and the method for controlling a new energy hybrid hydrogen production system comprising:

determining whether power outputted from the new energy power generation system in the new energy hybrid hydrogen production system meets a hydrogen production requirement of the alkaline hydrogen production system in the new energy hybrid hydrogen production system;
controlling, if the power outputted from the new energy power generation system does not meet the hydrogen production requirement of the alkaline hydrogen production system, the power conversion system in the new energy hybrid hydrogen production system to provide power for hydrogen production to the non-alkaline hydrogen production system in the new energy hybrid hydrogen production system; and
controlling, if the power outputted from the new energy power generation system meets the hydrogen production requirement of the alkaline hydrogen production system, the power conversion system to provide power for hydrogen production to at least the alkaline hydrogen production system.

9. The method for controlling a new energy hybrid hydrogen production system according to claim 8, wherein the determining whether power outputted from the new energy power generation system in the new energy hybrid hydrogen production system meets a hydrogen production requirement of the alkaline hydrogen production system in the new energy hybrid hydrogen production system comprises:

performing a maximum power point tracking, MPPT, operation based on information on the power outputted from the new energy power generation system that is acquired in a real time manner, to determine a theoretical hydrogen production input value of the alkaline hydrogen production system;

determining whether the theoretical hydrogen production input value is greater than a minimum hydrogen production limit of the alkaline hydrogen production system;

determining, if the theoretical hydrogen production input value is greater than the minimum hydrogen production limit of the alkaline hydrogen production system, that the power outputted from the new energy power generation system meets the hydrogen production requirement of the alkaline hydrogen production system; and

determining, if the theoretical hydrogen production input value is less than or equal to the minimum hydrogen production limit of the alkaline hydrogen production system, that the power outputted from the new energy power generation system does not meet the hydrogen production requirement of the alkaline hydrogen production system.

10. The method for controlling a new energy hybrid hydrogen production system according to claim 9, wherein in a case that the power conversion system comprises two power converters comprising a first power converter configured to provide power for hydrogen production to the alkaline hydrogen production system and a second power converter configured to provide power for hydrogen production to the non-alkaline hydrogen production system, the controlling the power conversion system to provide power for hydrogen production to at least the alkaline hydrogen production system comprises:

controlling the first power converter to operate, and controlling the second power converter to be in a standby state; and

in a case that the theoretical hydrogen production input value is greater than a regulation command value or a hydrogen production limit of the alkaline hydrogen production system, controlling the first power converter to operate with the regulation command value or the hydrogen production limit as an output reference value, and controlling the second power converter to operate with a result of the theoretical hydrogen production input value minus the output reference value of the first power converter as an output reference value.

11. The method for controlling a new energy hybrid hydrogen production system according to claim 10, wherein the in a case that the theoretical hydrogen production input value is greater than a regulation command value or a hydrogen production limit of the alkaline hydrogen production system, controlling the first power converter to operate with the regulation command value or the hydrogen production limit as an output reference value, and controlling the second power converter to operate with a result of the theoretical hydrogen production input value minus the output reference value of the first power converter as an output reference value comprises:

determining whether the first power converter receives the regulation command value;

determining, if the first power converter receives the regulation command value, whether the theoretical hydrogen production input value is greater than the regulation command value;

if the theoretical hydrogen production input value is greater than the regulation command value, controlling the first power converter to operate with the regulation command value as the output reference value, and controlling the second power converter to operate with a result of the theoretical hydrogen production input value minus the regulation command value as the output reference value; and

if the theoretical hydrogen production input value is less than or equal to the regulation command value, controlling the first power converter to operate with the theoretical hydrogen production input value as the output reference value, and controlling the second power converter to be in the standby state;

determining, if the first power converter receives no regulation command value, whether the theoretical hydrogen production input value is greater than the hydrogen production limit;

if the theoretical hydrogen production input value is greater than the hydrogen production limit, controlling the first power converter to operate with the hydrogen production limit as the output reference value, and controlling the second power converter to operate with a result of the theoretical hydrogen production input value minus the hydrogen production limit as the output reference value; and

if the theoretical hydrogen production input value is less than or equal to the hydrogen production limit, controlling the first power converter to operate with the theoretical hydrogen production input value as the output reference value, and controlling the second power converter to be in the standby state.

12. The method for controlling a new energy hybrid hydrogen production system according to any one of claims 8 to 11, wherein before the determining whether power outputted from the new energy power generation system in the new energy hybrid hydrogen production system meets a hydrogen production requirement of the alkaline hydrogen production system in the new energy hybrid hydrogen production system, the method further comprises:
controlling, when the new energy power generation system is powered on, the power conversion system to output power to the non-alkaline hydrogen production system.

13. The method for controlling a new energy hybrid hydrogen production system according to any one of claims 9 to 11, wherein

in a case that the theoretical hydrogen production input value is a theoretical hydrogen production input power, the minimum hydrogen production limit is a minimum hydrogen production power limit; and
in a case that the theoretical hydrogen production input value is a theoretical hydrogen production input current, the minimum hydrogen production limit is a minimum hydrogen production current limit, and the theoretical hydrogen production input current is determined by following equations:

$$Uin=U\_limit+(Pmpp*Req)^{1/2}, \text{ and, } Iin= Pmpp/Uin;$$

and,

$$Uin=U\_limit+(Pmpp*Req)^{1/2}, \text{ and, } Iin= Pmpp/Uin;$$

wherein Uin represents a theoretical hydrogen production input voltage, U_limit represents a minimum hydrogen production voltage limit of the alkaline hydrogen production system, Pmpp represents the theoretical hydrogen production input power, Req represents an equivalent resistance of the alkaline hydrogen production system, and Iin represents the theoretical hydrogen production input current.

14. The method for controlling a new energy hybrid hydrogen production system according to claims 10 to 11, wherein

the theoretical hydrogen production input value is a theoretical hydrogen production input current or a theoretical hydrogen production input power,
the regulation command value is a regulation command current or a regulation command power, and
the hydrogen production limit is a hydrogen production current limit or a hydrogen production power limit.

15. The method for controlling a new energy hybrid hydrogen production system according to any one of claims 8 to 11, wherein

in a case that the power conversion system comprises a power converter and two switching units, the controller of the new energy hybrid hydrogen production system is a controller arranged in the power converter; and
in a case that the power conversion system comprises two power converters, the controller of the new energy hybrid hydrogen production system is a communication master among the two power converters, or a system controller in the new energy hybrid hydrogen production system.

┌─────────────┐        ┌─────────────┐                    ┌─────────────┐
│  10         │        │  20         │                    │  30         │
│ New energy  │        │ Power       │                    │ Alkaline    │
│ power       │────────│ conversion  │──────────┬─────────│ hydrogen    │
│ generation  │        │ system      │          │         │ production  │
│ system      │        │             │          │         │ system      │
└─────────────┘        └─────────────┘          │         └─────────────┘
                                                 │
                                                 │         ┌─────────────┐
                                                 │         │  40         │
                                                 │         │ Non-alkaline│
                                                 └─────────│ hydrogen    │
                                                           │ production  │
                                                           │ system      │
                                                           └─────────────┘

**Figure 1**

**Figure 2**

20

10                      201                              30

New energy power          First power          Alkaline
generation system         converter            hydrogen
                                               production
                                               system

                        202                              40

                         Second power          Non-alkaline
                         converter             hydrogen
                                               production
                                               system

**Figure 3**

20

10                      201                              30

New energy power          First power          Alkaline
generation system         converter            hydrogen
                                               production
                                               system

                        202                              40

                         Second power          Non-alkaline
                         converter             hydrogen
                                               production
                                               system

                         System controller    203

**Figure 4**

Start

Determine
whether power
outputted from the new
energy power generation system
in the new energy hybrid hydrogen
production system meets a hydrogen
production requirement of the alkaline
hydrogen production system in the
new energy hybrid hydrogen
production
system

S101

No

Yes

S103

S102

Control the power conversion
system in the new energy hybrid
hydrogen production system to
provide power for hydrogen
production to the non-alkaline
hydrogen production system in
the new energy hybrid hydrogen
production system

Control the power conversion
system in the new energy hybrid
hydrogen production system to
provide power for hydrogen
production to at least the alkaline
hydrogen production system

End

**Figure 5**

**Figure 6**

Start

Perform a MPPT operation according to information on power outputted from the new energy power generation system in the new energy hybrid hydrogen production system that is acquired in a real time manner, to determine a theoretical hydrogen production input value of the alkaline hydrogen production system — S201

Determine whether the theoretical hydrogen production input value is greater than a minimum hydrogen production limit of the alkaline hydrogen production system — S202 — S101

No

Yes

S102

S103

Control the power conversion system in the new energy power generation system to provide power for hydrogen production to the non-alkaline hydrogen production system in the new energy hybrid hydrogen production system

Control the first power converter to operate, and control the second power converter to be in a standby state — S301

In a case that the theoretical hydrogen production input value is greater than a regulation command value or a hydrogen production limit of the alkaline hydrogen production system, control the first power converter to operate with the regulation command value or the hydrogen production limit as an output reference value, and control the second power converter to operate with a result of the theoretical hydrogen production input value minus the output reference value of the first power converter as an output reference value — S302

End

**Figure 7**

Start

Perform a MPPT operation according to information on power outputted from the new energy power generation system in the new energy hybrid hydrogen production system that is acquired in a real time mainner, to determine a theoretical hydrogen production input value of the alkaline hydrogen production system — S201

S202   S101

Whether the theoretical hydrogen production input value is greater than a minimum hydrogen production limit of the alkaline hydrogen production system

Yes

Control the first power converter to operate, and control the second power converter to be in a standby state — S301

S302

Determine whether the first power converter receives a regulation command value — S401

No                                          Yes

S403 — Determine whether the theoretical hydrogen production input value is greater than a hydrogen production limit

Yes                         No

S402 — Determine whether the theoretical hydrogen production input value is greater than the regulation command value

No                          Yes

Control the first power converter to operate with the hydrogen production limit as an output reference value, and control the second power converter to operate with a result of the theoretical hydrogen production input value minus the hydrogen production limit as an output reference value

Control the first power converter to operate with the theoretical hydrogen production input value as an output reference value, and control the second power converter to be in the standby state

Control the first power converter to operate with the theoretical hydrogen production input value as an output reference value, and control the second power converter to be in the standby state

Control the first power converter to operate with the regulation command value as the output reference value, and control the second power converter to operate with a result of the theoretical hydrogen production input value minus the regulation command value as an output reference value

End

**Figure 8**

## INTERNATIONAL SEARCH REPORT

| International application No. |
| --- |
| **PCT/CN2020/092057** |

**A.    CLASSIFICATION OF SUBJECT MATTER**

C25B 15/02(2006.01)i;  H02J 3/38(2006.01)i

According to International Patent Classification (IPC) or to both national classification and IPC

**B.    FIELDS SEARCHED**

Minimum documentation searched (classification system followed by classification symbols)

C25B15/-; H02J3/-

Documentation searched other than minimum documentation to the extent that such documents are included in the fields searched

Electronic data base consulted during the international search (name of data base and, where practicable, search terms used)

CNABS, CNTXT, DWPI, CNKI, 读秀:阳光电源股份有限公司, 谷雨, 新能源, 光伏, 风能, 风力, 功率变换, 非碱液, 制氢, 碱, 固体氧化物, 切换, 变换, wind power, PEM, AC, DC, hydrogen

**C.    DOCUMENTS CONSIDERED TO BE RELEVANT**

| Category* | Citation of document, with indication, where appropriate, of the relevant passages | Relevant to claim No. |
| --- | --- | --- |
| A | CN 109004665 A (HEBEI UNIVERSITY OF SCIENCE AND TECHNOLOGY) 14 December 2018 (2018-12-14)<br>description, paragraphs 4-10 | 1-15 |
| A | CN 108155662 A (BEIJING ETECHWIN ELECTRICAL CO., LTD.) 12 June 2018 (2018-06-12)<br>description, paragraphs 6-11 | 1-15 |
| A | CN 106119883 A (TONGJI UNIVERSITY) 16 November 2016 (2016-11-16)<br>description, paragraphs 8-37 | 1-15 |
| A | CN 107332274 A (GUANGZHOU LIGHT MESSENGER TECHNOLOGY APPLICATION CO., LTD.) 07 November 2017 (2017-11-07)<br>description, paragraphs [0006]-[0026] | 1-15 |
| A | CN 109755965 A (HEBEI UNIVERSITY OF SCIENCE AND TECHNOLOGY) 14 May 2019 (2019-05-14)<br>description, paragraphs 4-9 | 1-15 |
| A | CN 103107588 A (JIANGSU NON-GRID CONNECTED WIND POWER CO., LTD.) 15 May 2013 (2013-05-15)<br>description, paragraphs 4-6 | 1-15 |

☑ Further documents are listed in the continuation of Box C.    ☑ See patent family annex.

| | |
| --- | --- |
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **13 August 2020** | **21 August 2020** |

| Name and mailing address of the ISA/CN | Authorized officer |
| --- | --- |
| **China National Intellectual Property Administration (ISA/ CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2020/092057** |

C.    DOCUMENTS CONSIDERED TO BE RELEVANT

| Category* | Citation of document, with indication, where appropriate, of the relevant passages | Relevant to claim No. |
| --- | --- | --- |
| A | US 10066511 B2 (SIEMENS AG.) 04 September 2018 (2018-09-04)<br>     entire document | 1-15 |

Form PCT/ISA/210 (second sheet) (January 2015)

INTERNATIONAL SEARCH REPORT
Information on patent family members

International application No.

**PCT/CN2020/092057**

| Patent document cited in search report | | | Publication date (day/month/year) | Patent family member(s) | | | Publication date (day/month/year) |
|---|---|---|---|---|---|---|---|
| CN | 109004665 | A | 14 December 2018 | None | | | |
| CN | 108155662 | A | 12 June 2018 | CN | 108155662 | B | 09 June 2020 |
| CN | 106119883 | A | 16 November 2016 | CN | 106119883 | B | 26 October 2018 |
| CN | 107332274 | A | 07 November 2017 | None | | | |
| CN | 109755965 | A | 14 May 2019 | None | | | |
| CN | 103107588 | A | 15 May 2013 | None | | | |
| US | 10066511 | B2 | 04 September 2018 | RU | 2663761 | C2 | 09 August 2018 |
| | | | | KR | 101987969 | B1 | 11 June 2019 |
| | | | | ES | 2698604 | T3 | 05 February 2019 |
| | | | | EP | 3154904 | B1 | 26 September 2018 |
| | | | | WO | 2015192877 | A1 | 23 December 2015 |
| | | | | KR | 20170018949 | A | 20 February 2017 |
| | | | | CN | 106458618 | A | 22 February 2017 |
| | | | | RU | 2016149483 | A | 16 July 2018 |
| | | | | DK | 3154904 | T3 | 03 December 2018 |
| | | | | EP | 3154904 | A1 | 19 April 2017 |
| | | | | RU | 2016149483 | A3 | 16 July 2018 |
| | | | | US | 2017122129 | A1 | 04 May 2017 |

Form PCT/ISA/210 (patent family annex) (January 2015)

**REFERENCES CITED IN THE DESCRIPTION**

**Patent documents cited in the description**

- CN 201911133803